**Europäisches Patentamt**

**European Patent Office**

**Office européen des brevets**

(11) Veröffentlichungsnummer: **0 413 166 A1**

# EUROPÄISCHE PATENTANMELDUNG

(21) Anmeldenummer: **90113932.9**

(22) Anmeldetag: **20.07.90**

(51) Int. Cl.5: **A22C 15/00**

(30) Priorität: **16.08.89 CH 2992/89**

(43) Veröffentlichungstag der Anmeldung:
**20.02.91 Patentblatt 91/08**

(84) Benannte Vertragsstaaten:
**AT CH DE FR GB LI SE**

(71) Anmelder: **Wälchli, Hans, Dr.**
**Rebbergstrasse 32**
**CH-8113 Boppelsen(CH)**

(72) Erfinder: **Wälchli, Hans, Dr.**
**Rebbergstrasse 32**
**CH-8113 Boppelsen(CH)**

(74) Vertreter: **Blum, Rudolf Emil Ernst et al**
**c/o E. Blum & Co Patentanwälte Vorderberg 11**
**CH-8044 Zürich(CH)**

(54) Verfahren zum Anordnen von Würsten an einem Rauchstab sowie Rauchstab und Aufhänger zu dessen Durchführung.

(57) Die Würste werden mit einem Aufhängemittel (3) versehen, welches eine Verdickung aufweist (7). Das Aufhängemittel wird dann in einen Schlitz (5) des Rauchstabes (2) eingeführt, derart, dass die Würste an den Verdickungen (7) aufgehängt werden. Das Verfahren erlaubt auf einfache Art das automatische Aufhängen von Würsten.

Fig. 1

EP 0 413 166 A1

## VERFAHREN ZUM ANORDNEN VON WÜRSTEN AN EINEM RAUCHSTAB SOWIE RAUCHSTAB UND AUFHÄNGER ZU DESSEN DURCHFÜHRUNG

Die Erfindung betrifft ein Verfahren zum Anordnen von Würsten an einem stabförmigen Element, bei welchem an jeder Wurst oder jeweils an einer Kette von Würsten ein Aufhängemittel befestigt wird. Ferner betrifft die Erfindung ein Element und ein Aufhängemittel zur Durchführung des Verfahrens. Ferner betrifft die Erfindung eine spezielle Anwendung des Verfahrens.

Es ist bekannt, eine Mehrzahl von Würsten an einem sogenannten Rauchstab hintereinandergereiht aufzuhängen. Die Würste werden nachfolgend an diesem Rauchstab hängend zur Weiterbehandlung in eine Räucherkammer verbracht. Zum Aufhängen der Würste am Rauchstab oder allgemein an einer Haltestange ist es bekannt, bei der Herstellung der Wurst an dieser eine Wurstaufhängeschlaufe zu befestigen, wie sie z.B. aus der CH-PS 663 876 bekannt ist. Die Befestigung der Schlaufe erfolgt dabei in der Regel mit dem die Wurst verschliessenden Drahtclip. Die Würste werden dann von Hand am Rauchstab oder an der Stange aufgehängt, indem die Schlaufe über den Stab oder die Stange geschoben wird.

Bestrebungen, diesen Vorgang zu automatisieren, führten zu komplizierten Vorrichtungen, da jeweils ein Führungselement in die Schlaufe eingefädelt werden muss, um diese über den Rauchstab zu ziehen. Das Einbringen dieses Führungselementes in die Schlaufe ist aufwendig, da diese dazu zunächst in eine sehr genau definierte Lage gebracht werden muss, was bei den hohen Kadenzen der Wurstverschliessmaschinen Probleme schafft. Solche Vorrichtungen sind z.B. aus der DE-OS 34 37 830 und aus der EP-A 129 864 bekannt.

Der Erfindung liegt deshalb die Aufgabe zugrunde, eine Möglichkeit zu schaffen, das automatische Anordnen bzw. Aufhängen von Würsten an einem stabförmigen Element, insbesondere einem Rauchstab, einfach, schnell und sicher zu bewerkstelligen.

Dies wird beim Verfahren der eingangs genannten Art dadurch erreicht, dass ein faden- oder bandförmiges Aufhängemittel an der Wurst befestigt wird, welches an seinem wurstabgewandten Endbereich mit einer Verdickung versehen ist, und dass das Aufhängemittel mit der Verdickung durch eine Oeffnung des Elementes in einen Hohlraum desselben eingeführt und in einen Bereich des Elementes transportiert wird, in welchem die Verdickung durch das Element gehalten wird.

Das Element und das Aufhängemittel zur Durchführung des Verfahrens sind gemäss den Ansprüchen 2 bzw. 5 ausgestaltet.

Da beim erfindungsgemässen Verfahren keine Schlaufe geöffnet und über den Rauchstab gezogen werden muss, ergibt sich eine wesentliche Vereinfachung. Es muss lediglich die Verdickung des Aufhängemittels in eine zunächst ungefähr bestimmte Lage gebracht werden, wie es nachfolgend genauer beschrieben wird.

Im folgenden sollen Ausführungsbeispiele der Erfindung anhand der Zeichnungen näher erläutert werden. Darin zeigt:

Fig. 1 eine perspektivische Teilansicht dreier Würste und eines Rauchstabes;

Fig. 2 einen Querschnitt durch eine Ausführungsform des Raubstabes;

Fig. 3a - 3d Querschnitte durch Rauchstäbe;

Fig. 4 ein Aufhängemittel;

Fig. 5 ein weiteres Aufhängemittel;

Fig. 6 einen Längsschnitt durch ein Element zur Erläuterung einer speziellen Anwendung.

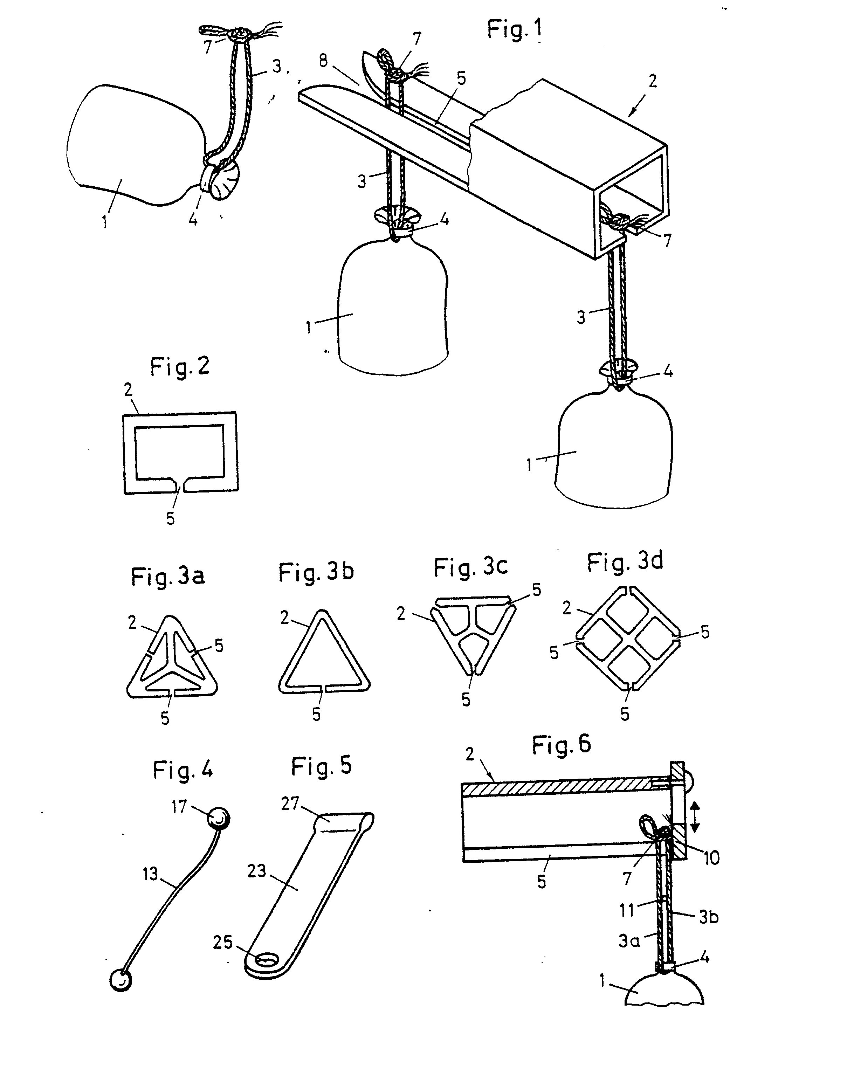

Fig. 1 zeigt zur grundsätzlichen Erläuterung des Verfahrens jeweils das Ende dreier aufeinanderfolgender Würste 1, an welchem jeweils mittels des Clips 4 eine Fadenschlaufe 3 mit einem Knoten 7 befestigt ist, wie sie z.B. aus der CH-PS 663 876 bekannt ist. Der Rauchstab 2 ist als rechteckiges Hohlprofil ausgeführt, indes zur besseren Darstellung nur zum Teil als solches dargestellt. Dieses Hohlprofil, welches z.B. aus Aluminium oder rostfreiem Stahl besteht, weist einen Schlitz 5 auf, der schmaler als der Durchmesser des Knotens 7 ist, aber breiter als der Faden der Schlaufe 3. Die Wurst 1 wird von einem nicht dargestellten Fördermittel zum Rauchstab transportiert und die Fadenschlaufe wird - wie nachfolgend genauer beschrieben - so ausgerichtet, dass der Faden in den Schlitz des Rauchstabes eintritt. Die Mündung des Schlitzes 5 kann dabei erweitert sein und einen Einlauf 8 bilden. Das Fördermittel wird anschliessend nicht mehr dazu benötigt, die Wurst zu halten; dies erfolgt mittels des Knotens 7, der innen beidseits des Schlitzes 5 auf dem Rauchstab aufliegt. Die Weiterbeförderung der Würste entlang des Rauchstabes bis zu dessen Ende kann durch das Fördermittel erfolgen. Es kann aber auch lediglich durch das Nachschieben weiterer Würste am Anfang des Rauchstabes erfolgen.

Das Ausrichten des Aufhängemittels 3 kann auf verschiedene, an sich bekannte Weise geschehen und ist nicht kritisch, da lediglich darauf geachtet werden muss, dass der Knoten 7 oberhalb des Schlitzes 5 zugeführt wird. Zur seitlichen Führung können an den Einlauf 8 des Rauchstabes 2 anschliessende Führungen vorgesehen sein. Das Ausrichten der Aufhängemittel kann z.B. mittels gegenläufig rotierender Bürsten erfolgen oder mittels eines Luftstromes. Da zum Aufhängen der Würste die Fadenschlaufe nicht durchstochen werden muss, genügen diese einfachen Mittel zum ungefähren Ausrichten des Aufhängemittels.

Fig. 2 zeigt einen Querschnitt durch einen Rauchstab gemäss Fig. 1. Dabei sind die Seitenwände des Schlitzes 5 angeschrägt. Dadurch kann erreicht werden, dass die Verdickung des Aufhängemittels sich teilweise im Schlitz verkantet und somit die Wurst weniger leicht entlang des Schlitzes bzw. des Rauchstabes gleitet. Dies kann erwünscht sein, da häufig mehrere Rauchstäbe mit Würsten auf einem Wagen transportiert werden und eine Verschiebung der Würste entlang des jeweiligen Rauchstabes beim Transport zu einem Kippen des Wagens führen kann.

Fig. 3a bis 3d zeigen weitere Ausführungen von Rauchstäben im Querschnitt. Diese weisen z.T. entlang jeder Seite eine in Längsrichtung verlaufende Nut zur Aufnahme der Aufhängemittel auf.

Fig. 4 und 5 zeigen weitere Ausführungsbeispiele für Aufhängemittel. Dieses kann beim erfindungsgemässen Verfahren anstelle einer Fadenschlaufe nur ein einzelner Faden mit einer Verdickung an einem Ende sein. In diesem Fall wird aber eine Verdickung am wurstseitigen Ende ebenfalls vorteilhaft sein, um ein Abrutschen des mittels Clip befestigten Fadens an der Wurst zu vermeiden. Die Ausführung nach Fig. 4 kann z.B. von einem Kunststoffaden gebildet werden, an dessen Ende jeweils eine Kunststoffverdickung angegossen ist.

Die Ausführung nach Fig. 5 ist bandförmig und weist eine zylindrische Verdickung auf. Wurstseitig ist ein Loch vorgesehen, durch welches der Clip verlaufen kann, um ein sicheres Halten des Aufhängemittels an der Wurst zu gewährleisten. Das Band kann beschriftbar ausgeführt sein und kann somit gleichzeitig als Etikette dienen.

Nach dem Räuchern werden die Würste vom Rauchstab genommen. Dies kann durch Zerschneiden des Aufhängemittels erfolgen. Das erfindungsgemässe Verfahren erlaubt das beschriebene, einfache Aufhängen der Würste. Sollte es aber dennoch gewünscht sein, die Würste mit über einen Stab gezogenen Schlaufen aufzuhängen, so ergibt die Anwendung einer Weiterbildung des Verfahrens auch dafür eine Vereinfachung, welche anhand von Fig. 6 erläutert wird, die einen Längsschnitt durch ein Element 2 zeigt. Dabei wird ein beweglicher Anschlag 10 vorgesehen, welcher quer zum Schlitz 5 verläuft und an welchem die Fadenschlaufe beim Transport entlang des Schlitzes 5 zum Anliegen kommt. Da der Schlitz 5 nur wenig breiter als der Faden ist, sind die Fadenschlaufen im Schlitz jeweils so angeordnet, dass die beiden Abschnitte 3a und 3b der Fadenschlaufe mit Sicherheit nebeneinander, bzw. in Transportrichtung hintereinander liegen. Durch den Anschlag 10 und den Schlitz 5 ergibt sich somit eine genau definierte Lage der Schlaufe. Befindet sich die Schlaufe am Anschlag 10, so kann daher eine Nadel 11 an diesem definierten Ort durch die Schlaufe geführt werden. Die Schlaufe ist somit erfasst, und der Anschlag 10 kann vom Schlitz wegbewegt werden, um das Herausführen der Fadenschlaufe aus den Schlitz mittels der Nadel zu ermöglichen. Da die Schlaufe nun erfasst ist, kann sie auf bekannte Weise über einen Stab gezogen werden.

Das Verfahren gemäss den Ansprüchen 1 und 2 kann daher generell zum Vereinzeln von Würsten mit Fadenschlaufen vorgesehen werden. Das Element 2 bildet dabei keinen Rauchstab, sondern ist auf einen kurzen Abschnitt zum Ausrichten und Durchstossen der Fadenschlaufe beschränkt und kann maschinenfest angeordnet sein.

## Ansprüche

1. Verfahren zum Anordnen von Würsten an einem stabförmigen Element, bei welchem an jeder Wurst oder jeweils an einer Kette von Würsten ein Aufhängemittel befestigt wird, dadurch gekennzeichnet, dass ein faden- oder bandförmiges Aufhängemittel (3,13,23) an der Wurst (1) befestigt wird, welches an seinem wurstabgewandten Endbereich mit einer Verdickung (7,17,27) versehen ist, und dass das Aufhängemittel mit der Verdickung durch eine Oeffnung des Elementes (1) in einen Hohlraum desselben eingeführt und in einen Bereich des Elementes transportiert wird, in welchem die Verdickung durch das Element gehalten wird.

2. Element zur Durchführung des Verfahrens nach Anspruch 1, dadurch gekennzeichnet, dass das Element als Rauchstab ausgebildet ist und dass der Rauchstab mindestens eine Oeffnung, welche grösser als die Verdickung des Aufhängemittels ist, und mindestens eine mit der Oeffnung verbundene Nut mit aufgeweitetem Grund aufweist, wobei die Nutenöffnung (5) schlitzförmig in der Längsachse des Rauchstabes verläuft und eine Weite aufweist, welche grösser ist als der Durchmesser bzw. die Dicke des zwischen Wurst und Verdickung liegenden Abschnittes des faden- bzw. bandförmigen Aufhängemittels und kleiner als der Durchmesser der Verdickung.

3. Element nach Anspruch 2, dadurch gekennzeichnet, dass die schlitzförmige Nutenöffnung rauchstabinnenseitig mit Anschrägungen versehen ist.

4. Element nach Anspruch 2 oder 3, dadurch gekennzeichnet, dass der Rauchstab von einem stirnseitig offenen, längsgeschlitzten Aluminiumprofil gebildet wird.

5. Aufhängemittel zur Durchführung des Verfahrens nach Anspruch 1, dadurch gekennzeichnet, dass es faden- oder bandförmig ist und mindestens an einem Ende eine Verdickung aufweist.

6. Aufhängemittel nach Anspruch 5, dadurch gekennzeichnet, dass das Aufhängemittels als verknotete Fadenschlaufe (3) ausgebildet ist, deren Knoten (7) die Verdickung bildet.

7. Aufhängemittel nach Anspruch 5, dadurch gekennzeichnet, dass das Aufhängemittel als Kunststofffaden (13) mit einer Verdickung an beiden Enden ausgestaltet ist.

8. Aufhängemittel nach Anspruch 5, dadurch gekennzeichnet, dass das Aufhängemittel als beschriftbares Band (23) mit einem gelochten Ende und einem verdickten Ende ausgeführt ist.

9. Anwendung des Verfahrens nach Anspruch 1 zum Vereinzeln von mit Fadenschlaufen versehenen Würsten und Aufziehen der Fadenschlaufe auf eine Haltestange, dadurch gekennzeichnet, dass das Aufhängemittel von einer verknoteten Fadenschlaufe (3) gebildet wird, dass die beiden Schlaufenabschnitte (3a,3b) im Element in einer Ebene nebeneinanderliegend angeordnet und mittels eines Anschlages (10) in eine definierte Lage gebracht werden, worauf eine Nadel (11) zwischen den Schlaufenabschnitten eingebracht wird und die Schlaufe aus dem Element herausgezogen und über eine Stange geführt wird.

Fig. 1

Fig. 2

Fig. 3a

Fig. 3b

Fig. 3c

Fig. 3d

Fig. 4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | US-A-3 831 769  (FRANK)<br>* das ganze Dokument * | 1,2,4,5,7,<br>3,6,9 | A 22 C 15/00 |
| A | DE-A-1 005 816  (APPELT) | | |

RECHERCHIERTE SACHGEBIETE (Int. Cl.5)

A 22 C

Der vorliegende Recherchenbericht wurde für alle Patentansprüche erstellt

| Recherchenort | Abschlußdatum der Recherche | Prüfer |
|---|---|---|
| Den Haag | 13 November 90 | DE LAMEILLIEURE D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument